# EUROPEAN PATENT APPLICATION

(11) **EP 4 641 144 A1**
(43) Date of publication of application: **29.10.2025**
(21) Application number: 25171795.5
(22) Date of filing: 22.04.2025
(51) Int. Cl.: G01F 1/66, G01F 15/14, G01F 15/18

(54) **CONNECTOR**

(30) Priority: 26.04.2024 DE 102024111878
(71) Applicant: Landis+Gyr GmbH, 90459 Nürnberg (DE)
(72) Inventor: WAGNER, Christian, 90459 Nürnberg (DE); OLBERS, Andreas, 90459 Nürnberg (DE); WESTERMEIER, Bernd, 90459 Nürnberg (DE)
(74) Representative: Marks & Clerk LLP

(57) **Abstract**

A connector for connecting a measurement insert to a flow tube of a utility meter, the connector being configured to connect to a transducer opening of the flow tube of the utility meter. The connector comprises a first portion configured to receive a part of an ultrasonic transducer and a second portion comprising a first connection element. The first connection element is configured to connect to a second connection element of the measurement insert.

## Description

### FIELD

The present disclosure relates to a connector, a measurement insert, a utility meter and associated methods.

### BACKGROUND

A utility meter, such as a thermal energy meter, may be used to measure a quantity of thermal energy that is supplied to a consumer. The meter may be configured to measure the thermal energy based on a temperature and a rate of a fluid flowing through the utility meter. The utility meter may include a flow tube and a measurement insert that can be inserted in the flow tube. It may be desirable to fasten the measurement insert to the flow tube, e.g. to prevent movement of the measurement insert in a flow direction of the fluid and/or to prevent rotation of the measurement insert relative to the flow tube.

In known meters, a fastening screw and/or nut arrangement may be used to fasten the measurement to the flow tube. In such meters, an additional bore-hole may be required to fasten the measurement insert to the flow tube from the outside using the fastening screw and/or nut arrangement. This may require the use of additional sealing elements to prevent leakage of the fluid through the additional bore-hole to the outside.

In other known meters, a snap or retainer ring may be used to fasten the measurement insert to an inside of the flow tube. This may require complex machining of an inside of the flow tube. In such meters, the rotation of the measurement insert may be prevented by the shape of the measurement insert and the machined inside of the flow tube.

It is therefore an aim of at least one embodiment of at least one aspect of the present disclosure to obviate or at least mitigate at least one of the above identified shortcomings of the prior art.

### SUMMARY

According to a first aspect of the present disclosure there is provided a connector for connecting a measurement insert to a flow tube of a utility meter. The connector is configured to connect to a transducer opening of the flow tube of the utility meter. The connector comprises a first portion configured to support and/or receive a part of an ultrasonic transducer, and a second portion comprising a first connection element. The first connection element is configured to connect to a second connection element of the measurement insert.

By configuring the connector to connect to the transducer opening of the flow tube, an existing transducer opening of the flow tube may be used. This may avoid the need to form one or more additional openings or boreholes in the flow tube and/or the need of complex machining of an inner side of the flow tube. Additionally or alternatively, by configuring the connector to connect to an existing transducer opening of the flow tube, no additional sealing elements may be required.

Additionally or alternatively, by configuring the first connection element to connect to the second connection element of the measurement insert, movement of the measurement insert relative to the flow tube may be prevented. The connector may combine the functions of connecting the measurement insert to the flow tube and preventing or decreasing movement of the measurement insert relative to the flow tube. For example, movement of the measurement insert relative to the flow tube may comprise rotational movement of the measurement insert relative to the flow tube and/or movement of the measurement insert in a direction parallel to a longitudinal axis of the flow tube. The connector may additionally or alternatively allow for an improved and/or controllable alignment of the ultrasonic transducer relative to a respective reflector of the measurement insert.

The second portion may extend from the first portion. A height of the second portion may vary along a circumference of the second portion. The height of the second portion may vary along the circumference of the second portion such that the first connection element extends from the transducer opening to the measurement insert, e.g. when the connector is connected to the transducer opening. The height of the second portion may be smaller at a first position than at a second position on the second portion. The first position may be opposite to the first connection element. The second position may be adjacent to the first connection element. By varying the height of the second portion, an amount of the connector that protrudes into a measuring path of the utility meter may be reduced, e.g. when the connector is connected to the transducer opening, while simultaneously allowing a connection between the first and second connection elements. The second portion may be configured to connect to the transducer opening of the flow tube. The second portion may be configured to form an interference fit with the transducer opening of the flow tube.

The connector may comprise an alignment element. The alignment element may be arranged on the second portion, e.g. on a circumference of the second portion. The alignment element may be configured to align the connector in the transducer opening of the flow tube. For example, the alignment element may be configured to align the first connection element relative to the second connection element of the measurement insert. This may facilitate and/or improve a connection between the first and second connection elements. The alignment element may be configured to engage with a corresponding alignment element of the transducer opening. This may allow for a rotation-proof or twist-proof connection of the connector to the transducer opening.

The connector may comprise a plurality of protrusions. The plurality of protrusions may be arranged on the second portion, e.g. on a circumference of the second portion. At least one of the plurality of protrusions may be configured to align the connector in the transducer opening of the flow tube. For example, the at least one of the plurality of protrusions may be configured to align the first connection element relative to the second connection element of the measurement insert. This may facilitate and/or improve a connection between the first and second connection elements. The at least one of the plurality of protrusions may be configured to engage with the corresponding alignment element of the transducer opening. This may allow for a rotation-proof or twist-proof connection of the connector to the transducer opening. The at least one of the plurality of protrusions may comprise the alignment element. The alignment element may be referred to as a first alignment element. The corresponding alignment element of the transducer opening may be referred to as a second alignment element.

At least one other of the plurality of protrusions may be configured such that a circumference of a part of the second portion of the connector is larger than a circumference of the transducer opening of the flow tube. This may allow for the formation of the interference fit between the connector, e.g. the second portion, and the transducer opening. The interference fit between the connector and the transducer opening may provide an improved or secure connection of the measurement insert to the flow tube, e.g. while preventing the connector from becoming dislodged from the transducer opening.

The plurality of protrusions may allow for a rotation-proof or twist-proof and secure connection of the connector to the transducer opening. The provision of the connector with the plurality of protrusions may further improve an alignment and/or orientation of the measurement insert in the flow tube and/or relative to at least one transducer of the utility meter, e.g. while preventing movement of the measurement insert relative to the flow tube.

The first connection element may comprise at least one of: two or more notches configured to receive the second connection element, e.g. at least two respective protrusions of the second connection element, of the measurement insert and/or two or more protrusions configured to be received by the second connection element, e.g. at least two respective notches of the second connection element, of the measurement insert. By providing the first connection element with at least one of the two or more notches and/or two or more protrusions, rotational movement of the measurement insert relative to the flow tube may be prevented or reduced. For example, the provision of the at least one of the two or more notches and/or two or more protrusions may allow for a stop or limit stop for the second connection element of the measurement element to be defined.

The first portion may comprise a first surface for supporting the ultrasonic transducer. The first portion may comprise a second surface for supporting a sealing element. The first portion may comprise a third surface for supporting the connector on a wall surrounding the transducer opening.

According to a second aspect there is provided a measurement insert for arrangement in a flow tube of a utility meter, the measurement insert comprising at least two second connection elements, wherein each of the at least two second connection elements is configured to connect to a respective connector according to the first aspect.

By providing the measurement insert with at least two second connection elements, each of the at least two second connection elements being configured to connect to the respective connector, movement of the measurement insert relative to the flow tube may be prevented or reduced. For example, movement of the measurement insert may comprise rotational movement of the measurement insert relative to the flow tube and/or movement of the measurement insert in a direction parallel to the longitudinal axis of the flow tube.

Each of the at least two second connection elements may comprise at least one of: two or more notches configured to receive the first connection element, e.g. at least two respective protrusions of the first connection element, of the connector and/or two or more protrusions configured to be received by the first connection element, e.g. at least two respective notches of the first connection element, of the connector. By providing the second connection element with the two or more notches and/or two or more protrusions, rotational movement of the measurement insert relative to the flow tube may be prevented or reduced. For example, the provision of the two or more notches and/or two or more protrusions may allow for a stop or limit stop for the first connection element of the connector to be defined.

At least one of the at least two second connection elements may be arranged on a first end portion of the measurement insert. At least one other of the at least two connection elements may be arranged on a second end portion of the measurement insert. This may prevent or reduce movement of the measurement insert relative to the flow tube. For example, this may prevent or reduce rotational movement of the measurement insert relative to the flow tube and/or movement of the measurement insert in a direction parallel to a longitudinal axis of the flow tube.

According to a third aspect there is provided a utility meter, the utility meter comprising a flow tube, a measurement insert for arrangement in the flow tube of the utility meter according to the second aspect and a connector for connecting the measurement insert to the flow tube of the utility meter according to the first aspect.

The flow tube may also be referred to as a tubular portion.

The utility meter may comprise a thermal energy meter, such as a heat meter or a cooling meter. Alternatively, the utility meter may comprise a flow rate meter, such as a water meter or a gas meter.

According to a fourth aspect of the disclosure there is provided a method of forming a connector according to first aspect, the method comprising forming the connector using a moulding process, a shaping process or an additive manufacturing process.

According to a fifth aspect of the disclosure there is provided a method of forming a measurement insert according to second aspect, the method comprising forming at least a part of the measurement insert using a moulding process or an additive manufacturing process, the part of the measurement insert comprising the at least two second connection elements.

According to a sixth aspect of the present disclosure, there is provided a computer program comprising computer executable instructions that, when executed by a processor, cause the processor to control an additive manufacturing apparatus to manufacture a connector according to the first aspect and/or one or more parts of a measurement insert according to the second aspect.

According to sixth aspect of the present disclosure, there is provided a method of manufacturing a product via additive manufacturing. The method comprises obtaining an electronic file representing a geometry of the product. The method comprises controlling an additive manufacturing apparatus to manufacture, over one or more additive manufacturing steps, the product according to the geometry specified in the electronic file. The product is or comprises a connector according to the first aspect and/or one or more parts of a measurement insert according to the second aspect.

According to a seventh aspect there is provided a measurement insert assembly or arrangement for a utility meter, the assembly or arrangement comprising a connector according to the first aspect and a measurement insert according to the second aspect.

According to an eight aspect there is provided a method of forming a measurement insert assembly or arrangement, the method comprises forming a connector according to the first aspect. The connector may be formed using the method of the fourth aspect. The method comprises forming a measurement insert. At least a part of the measurement insert may be formed using the method of the fifth aspect.

According to a ninth aspect there is provided of a method of forming a utility meter. The method may comprise providing or forming a flow tube. The method may comprise forming or providing at least two connectors. At least one or each of the at least two connectors may comprise a connector according to the first aspect. The at least one or each of the at least two connectors may be formed using the method of the fourth aspect. The method may comprise forming or providing a measurement insert. The measurement insert may comprise a measurement insert according to the second aspect. At least a part of the measurement insert may be formed using the method of the fifth aspect. The method may comprise connecting the measurement insert to the flow tube. The step of connecting the measurement insert to the flow tube may comprise arranging the measurement insert in the flow tube. The step of connecting the measurement insert to the flow tube may comprise connecting at least one of the at least two connectors to a transducer opening of the flow tube. The step of connecting the measurement insert to the flow tube may comprise connecting a first connection element of the at least one connector to a second connection element of the measurement insert. The step of connecting the measurement insert to the flow tube may comprise connecting at least one other of the at least two second connectors to another transducer opening of the flow tube. The step of connecting the measurement insert to the flow tube may comprise connecting a first connection element of the at least one other connector to another second connection element of the measurement insert. The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilized, either alone or in combination with any other defined feature, in any other aspect or embodiment or to form a further aspect or embodiment of the disclosure.

### BRIEF DESCRIPTION OF THE DRAWINGS

These and other aspects of the present disclosure will now be described, by way of example only, with reference to the accompanying drawings, wherein:
Figure 1 depicts a cross-sectional view of a thermal energy meter for measuring a quantity of thermal energy that is supplied to a consumer according to an embodiment of the disclosure, the meter comprising two connectors for connecting a measurement insert to a flow tube of the meter;
Figure 2 shows a sectional view of one of the two connectors connected to a first opening of the flow tube of the meter of Figure 1;
Figures 3A and 3B show perspective views of a first connector for use in the meter of Figure 1;
Figure 4 shows an exploded view of the flow tube and the two connectors of Figure 1 without the measurement insert;
Figure 5A shows a perspective view of one of the two connectors connected to a part the measurement insert of Figure 1 from above;
Figure 5B shows a perspective view of one of the two connectors connected to a part the measurement insert of Figure 1 from underneath;
Figure 6 shows a perspective view of the meter of Figure 1 with the flow tube shown in section;
Figure 7 shows a sectional view of the measurement insert of the meter of Figure 1 with the two connectors connected thereto;
Figure 8 shows a top view of the flow tube of the meter of Figure 1 with only one of the two connectors connected to an opening of the flow tube;
Figure 9 shows another exemplary connector for use in the meter of Figure 1;
Figure 10 shows a flow chart illustrating in overview a method of forming a measurement insert assembly or arrangement for a utility meter according to an embodiment of the disclosure; and
Figure 11 shows a flow chart illustrating in overview a method of forming the meter of Figure 1 according to an embodiment of the disclosure.

### DETAILED DESCRIPTION OF THE DRAWINGS

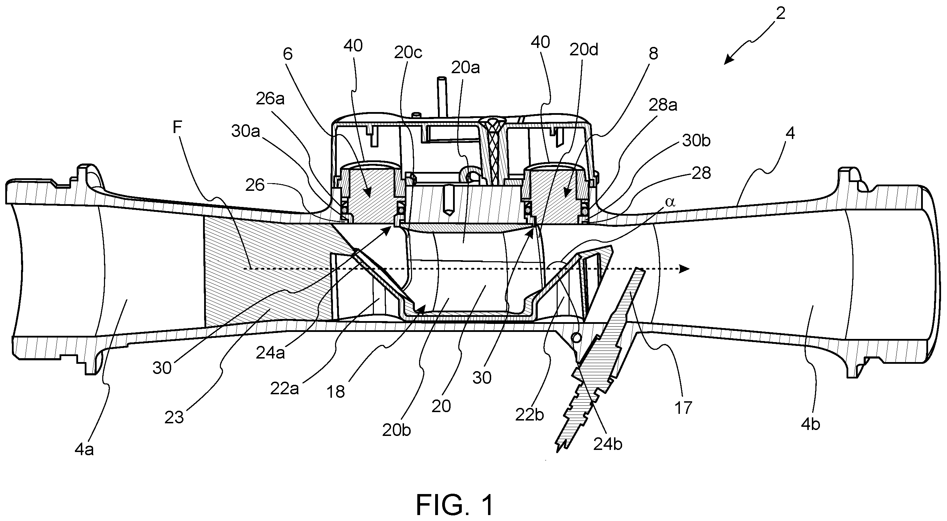

Figure 1 shows a utility meter 2 according to an embodiment of the disclosure. In this embodiment, the meter 2 is provided in the form of a thermal energy meter, such as a heat meter or a cooling meter. For example, the meter 2 is configured to measure a quantity of heat energy or cold energy that is supplied to a consumer. The meter 2 is configured to measure the quantity of thermal energy based on a temperature and a rate of a fluid flowing through the meter 2. The fluid may comprise a liquid medium or a gaseous medium. The meter 2 may be used in a domestic or industrial system.

The meter 2 comprises a tubular portion. The tubular portion is provided in the form of a flow tube 4. The flow tube may also be referred to as a measurement tube. The terms "flow tube" and "measurement tube" may be interchangeably used. The flow tube 4 comprises an inlet 4a and an outlet 4b. In use, the fluid flows from the inlet 4a to the outlet 4b of the flow tube 4 in a flow direction F, which indicated by the arrow in Figure 1.

In the embodiment shown in Figure 1, the flow tube 4 is provided in the form of a separate flow tube, which is configured to be arranged in a pipe or pipeline system through which the fluid flows. It will be appreciated that in other embodiments, the flow tube may not be separate from the pipe, but instead be part of a portion of the pipe or pipeline system. The flow tube 4 may be formed from a plastic material, such as a thermoplastic polymer material. An exemplary plastic material may comprise polyphenylene sulphide, glass-fibre-reinforced polyphenylene sulphide or another plastic or polymer material. The glass-fibre content of the glass-fibre-reinforced polyphenylene sulphide may be in the region of about 30% to 40%. However, it will be appreciated that in other embodiments, the flow tube may be formed from a metal material, such as brass or another metal material, or a metal alloy material.

The meter 2 comprises an ultrasonic flow rate meter. The meter 2 is configured to measure a flow rate of the fluid flowing through the flow tube 4 based on a transit time (or "time of flight") difference of oppositely propagating ultrasonic signals (e.g. sound waves). The meter 2 comprise a first transducer 6 and a second transducer 8. The first and second transducers 6, 8 are each provided in the form of an ultrasonic transducer. Each of the first and second ultrasonic transducers 6, 8 comprises a piezoelectric element, a dampening element, an acoustic insulator, and a metal shield (not shown). The first and second ultrasonic transducers 6, 8 are configured such that each of the first and second ultrasonic transducers 6, 8 can send ultrasonic signals to and receive ultrasonic signals from the other of the first and second ultrasonic transducers 6, 8. For example, the first ultrasonic transducer 6 may be configured to emit a first ultrasonic signal. The second ultrasonic transducer 8 may be configured to detect the first ultrasonic signal emitted by the first ultrasonic transducer. The second ultrasonic transducer 8 may be configured to emit a second ultrasonic signal in a direction opposite to the first signal. The first ultrasonic transducer 6 may be configured to detect the second ultrasonic signal. The first and second ultrasonic signals may each comprise a pulsed ultrasonic signal. A difference in arrival time between the first and second signals is measured and converted into a flow rate. For example, if no fluid flows through the flow tube 4 or a velocity of the fluid in the flow tube 4 equals zero, the arrival time of the first and second signals is the same. When a fluid flows through the flow tube 4 or a velocity of the fluid in the flow tube is larger than zero, the arrival time of one of the first and second ultrasonic signals is different. This is because an ultrasonic signal travelling in the flow direction F is faster than an ultrasonic signal travelling in a direction opposite to the flow direction. The meter 2 may comprise processing circuitry configured to process the detected transit times. The processing circuitry may be configured to determine the flow rate of the fluid, e.g. based on the detected transit times.

The meter may comprise at least two temperature sensors for detecting a temperature difference of the fluid between two positions in the pipe or pipeline system, such as on either side of a consumer (not shown In Figure 1). At least one of the two temperature sensors may be arranged in proximity to the outlet 4b of the flow tube 4. The at least one of the two temperature sensors is indicated in Figure 1 by reference numeral 17. At least one other of the two temperature sensors may be arranged in the pipe or pipeline system, e.g. in the inlet or outlet of a cooling system or a heating system. The location of the at least one other of the two temperature sensors may depend on whether the meter is arranged in the inlet or outlet of the heating system or cooling system. For example, the meter 2 may be arranged in at least one of the inlet and outlet of the heating system or cooling system and the at least one other of the two temperature sensors is arranged in at least one other of the inlet and the outlet of the heating system or cooling system. The at least one other of the two temperature sensors is not shown in Figure 1.

It will be appreciated that in other embodiments, the meter may not comprise the temperature sensors. In such other embodiments, the meter may be provided in the form of a flow rate meter. In examples where the fluid is a liquid, such as water, the meter can be used as a water meter. In examples where the fluid is a gas, the meter can be used as a gas meter.

The meter 2 comprises a measurement insert 18. The measurement insert 18 is configured to be arranged in the flow tube 4. Figure 1 shows the flow tube 4 with the measurement insert 18 arranged therein. However, it will be appreciated that the measurement insert 18 is removeable from the flow tube 4, e.g. to allow replacement of the measurement insert 18.

The measurement insert 18 may be formed from a plastic material, such as a thermoplastic polymer material. An exemplary material that may be used to form the measurement insert may comprise polyphenylene sulphide, glass-fibre-reinforced polyphenylene sulphide or another plastic or polymer material. The glass-fibre content of the glass-fibre-reinforced polyphenylene sulphide may be in the region of about 30% to 40%.

The measurement insert 18 comprises a central portion 20. The central portion 20 is provided in the form of a tubular hollow space through which the fluid flows. The central portion 20 defines a measuring path of the meter 2. In the embodiment shown in Figure 1, the central portion 20 includes a first part 20a and a second part 20b. The first part 20a may also be referred to as a top part of the central portion 20 or the measurement insert 18. The second part 20b may also be referred to as a bottom portion of the central portion 20. The first and second parts 20a, 20b of the central portion 20 are configured to detachably connect to each other. The measurement insert 18 may comprise a plurality of further connection elements. For example, each of the first and second parts 20a, 20b may comprise a further connection element (not shown in Figure 1). The further connection element of one of the first and second parts 20a, 20b may comprise a protrusion, pin or the like. The further connection element of the other of the first and second parts 20a, 20b may comprise a groove, bore or the like. The groove, bore or the like may be configured to receive the protrusion, pin or the like. The further connection element of at least one or each of the first and second parts 20a, 20b may comprises a combination of one or more protrusions, pins, grooves, bores and/or the like.

When the first and second parts 20a, 20b of the central portion 20 are connected to each other, the first and second parts 20a, 20b define the tubular hollow space. For example, each of first and second parts 20a, 20b of the central portion 20 are provided in the form of a half of a tubular, half-shell or the like.

The measurement insert 18 comprises two supports 22a, 22b. The supports may also be referred to a support portions or structures 22a, 22b. The supports 22a, 22b are arranged on either side of the central portion 20. In the embodiment shown in Figure 1, the supports 22a, 22b are arranged on either side of the second part 20b of the central portion 20. The supports 22a, 22b are integrally formed with the second part 20b of the central portion 20. For example, the second part 20b of the central portion 20 and the supports 22a, 22b may be formed using a moulding process, such as an injection moulding process. However, it will be appreciated that in other embodiments at least one or each of the supports may be integrally formed with the first part of the central portion and/or another process, such as an additive manufacturing method, may be used to form the second part of the central portion and the supports.

Each support 22a, 22b is configured to hold a reflector 24a, 24b, such as a mirror, e.g. a metal mirror. The reflector 24a, 24b may also be referred to as a reflective element. As such, each support 22a, 22b may also be referred to as a reflector tower or reflector dome. Each support 22a, 22b is configured to streamline a flow of the fluid in the measuring path. For example, each support 22a, 22b may comprises a pointed shape. Each support 22a, 22b is configured to arrange a respective reflector 24a, 24b at an angle α relative to a longitudinal or central axis of the meter 2. In this embodiment, the angle α is about 45°. However, it will be appreciated that in other embodiments, the angle may be less or more than about 45°. Although the angle α is only indicated for one of the supports 22a, 22b in Figure 1, it will be appreciated that the other of the supports 22a, 22b is configured in the same manner. In the embodiment shown in Figure 1, the longitudinal or central axis of the meter 2 coincides with the flow direction F. However, it will be appreciated that in other embodiments, the longitudinal or central axis of the meter 2 may be parallel, e.g. substantially parallel, to the flow direction F.

The meter 2 comprises a flow conditioner 23. In this embodiment, the flow conditioner 23 is part of the measurement insert 18. For example, the flow conditioner 23 is integral with the measurement insert 18. When the fluid conditioner is provided separately from the measurement insert, turbulences in the fluid flowing through the flow tube may be present. For example, turbulences in the fluid flowing through the flow tube may be due to edges, such as fluid flow breakaway edges, and/or recirculation zones that may be present in the meter. These turbulences may be due to a relative positioning of the measurement insert and the flow conditioner.

By providing the flow conditioner as an integral part of the measurement insert, these turbulences in the fluid flowing through the meter may be reduced.

In this embodiment, the flow conditioner 23 is integral with the second part 20b of the central portion 20. However, it will be appreciated that in other embodiments, the flow conditioner may be part of and/or integral with the first part of the central portion.

The flow conditioner 23 is configured to extend from at least one of the supports 22a, 22b. For example, the at least one support 22a is arranged between the flow conditioner 23 and the central portion 20 of the measurement insert 18. The flow conditioner 23 is configured to condition and/or guide the fluid flowing through the meter, e.g. before the fluid enters the central portion 20 of the measurement insert 18. This may reduce turbulences in the fluid flowing through the meter 2, thereby improving an accuracy of the meter 2.

The flow tube 4 comprises a first opening 26 and a second opening 28. Each of the first and second openings 26, 28 is configured as a through-opening or through-hole. The first opening 26 is part of a first borehole 26a of the flow tube 4. The first borehole 26a is configured to receive the first ultrasonic transducer 6. The second opening 28 is part of a second borehole 28a of the flow tube 4. The second borehole 28a is configured to receive the second ultrasonic transducer 8. As such, each of the first and second openings 26, 28 may also be referred to as a transducer opening.

The arrangement of the first and second ultrasonic transducers 6, 8, the supports 22a, 22b and the reflectors 24a, 24b defines the propagation path of the first and second ultrasonic signals. In the embodiment shown in Figure 1, the meter 2 implements a "U-shaped" propagation path of the first and second ultrasonic signals. Thus, the first and second ultrasonic signals that are exchanged between the first and second ultrasonic transducers 6, 8 of the meter 2 do not travel in a straight line from one of the first and second ultrasonic transducers 6, 8 to the other of the first and second ultrasonic transducers 6, 8, but are guided by the reflectors 24a, 24b along a U-shaped path within the flow tube 4. The reflector 24a arranged in proximity of the inlet 4a may also be referred to as an upstream reflector 24a. The reflector 24b arranged in proximity to the outlet 4b may also be referred to as a downstream reflector 24b.

The first and second ultrasonic transducers 6, 8 are arranged in the respective first and second boreholes 26a, 28a such that the first and second ultrasonic signals are emitted or detected in a direction perpendicular, e.g. substantially perpendicular, to the flow direction F, at an end portion of the first and second ultrasonic transducers 6, 8. For example, in use, the first ultrasonic transducer 6 emits the first ultrasonic signal towards the first reflector 24a in a direction perpendicular, e.g. substantially perpendicular, to the flow direction F. The first reflector 24a reflects the first signal such that the first signal propagates in a direction parallel to the flow direction F. The second reflector 24b reflects the first signal towards the second ultrasonic transducer 8, thereby completing the U-shaped propagation path, Similarly, the second ultrasonic signal emitted by the second ultrasonic transducers propagates along the same path to the first reflector 24a, before being detected by the first ultrasonic transducer 6. The first and second ultrasonic signals propagate parallel to flow direction in the measuring path. The measuring path may also be understood as the propagation path between the first and second reflectors 24a, 24b.

The first and second ultrasonic transducers, the supports and the reflectors described herein are not limited to being arranged such that they define the U-shaped propagation path of the first and second ultrasonic signals. It will be appreciated that in other embodiments, one or more of the first and second ultrasonic transducers, the supports and the reflectors may be arranged to define a "W-shaped" propagation path, a "Z-shaped" propagation path, helical propagation path or another propagation path of the first and second ultrasonic signals. In such other embodiments, the meter may comprise one or more further supports and/or one or more further reflectors.

The meter 2 comprises a connector arrangement 30 for connecting the measurement insert 18 in the flow tube 4 of the meter to the flow tube 4. The connector arrangement 30 comprises a first connector 30a and a second connector 30b, which are shown in Figure 1. Each of the first and second connectors 30a, 30b may also be referred to as a fastening ring. Each of the first and second connectors 30a, 30b may be configured to connect to a respective one of the first and second openings 26, 28 of the flow tube 4.

Each of the first and second connectors 30a, 30b may be formed from a plastic material. The plastic material may be the same as the plastic material of the measurement insert 18, e.g. the first and second parts 20a, 20b of the central portion 20. The plastic material may comprise a thermoplastic polymer material. An exemplary material that may be used to form the first and second connectors 30a, 30b may comprise polyphenylene sulphide, glass-fibre-reinforced polyphenylene sulphide or another plastic or polymer material. The glass-fibre content of the glass-fibre-reinforced polyphenylene sulphide may be in the region of about 30% to 40%. Alternatively, each of the first and second connectors 30a, 30b may be formed from a metal material, such as brass or another metal material, or a metal alloy material, such as steel, stainless steel or another metal alloy material. It will be appreciated that the term "stainless steel" may be considered as encompassing the different types or variants of stainless steel. The first and second connectors may be formed using an additive manufacturing process, a shaping process, such as a milling process, a drilling process and/or another shaping process, and/or a moulding process, such as a die casting process. It will be appreciated that in some embodiments, one of the first and second connectors may be formed from the plastic material and the other one of the first and second connectors may be formed from the metal material or metal alloy material. The shaping process may also be referred to as a subtractive manufacturing process or method.

The first connector 30a is configured to connect a first portion of the measurement insert 18 to the flow tube 4. The first portion of the measurement insert 18 comprises a first end portion 20c of the first part 20a of the central portion 20. The second connector 30b is configured to connect a second portion of the measurement insert 18 to the flow tube 4. The second portion of the measurement insert 18 comprises a second end portion 20d of the first part 20a of the central portion 20.

By configuring each of the first and second connectors 30a, 30b to connect to one of the first and second openings 26, 28 of the flow tube 4, respectively, existing openings of the flow tube 4, which are part of the first and second boreholes 26a, 28a, may be used. This may avoid the need to form one or more additional openings or boreholes in the flow tube 4 and/or the need of complex machining of an inner side of the flow tube 4. Additionally or alternatively, by using the existing first and second openings 6, 8 of the flow tube 4, no additional sealing elements may be required.

Additionally or alternatively, by configuring the first connector 30a to connect to the first portion of the measurement insert 18 and the second connector 30b to connect to the second portion of the measurement insert 18, rotational movement of the measurement insert 18 relative to the flow tube 4 and/or movement of the measurement insert in a direction parallel to a longitudinal axis of the flow tube 4 may be prevented. The flow direction F may be parallel, e.g. substantially parallel, to the longitudinal axis of the flow tube 4. For example, the connector arrangement 30, e.g. the first and second connectors 30a, 30b, described herein may combine the functions of connecting the measurement insert 18 to the flow tube 4 and preventing movement of the measurement insert 18 relative to the flow tube 4. For example, movement of the measurement insert 18 may comprise rotational movement of the measurement insert 18 relative to the flow tube 4 and/or movement of the measurement insert 18 in a direction parallel to the longitudinal axis of the flow tube 4.

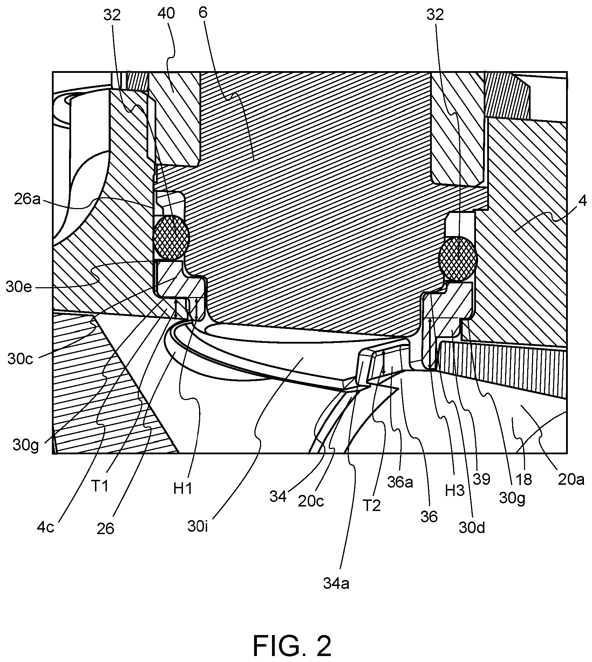

Figure 2 shows a sectional view of the first connector 30a connected to the first opening 26 of the flow tube 4 of the meter 2 shown in Figure 1. Although Figure 2 only shows the first connector 30a as connecting the measurement insert 18 to the flow tube 4, it will be appreciated that any features described in relation to the first connector 30a may also apply to the second connector 30b.

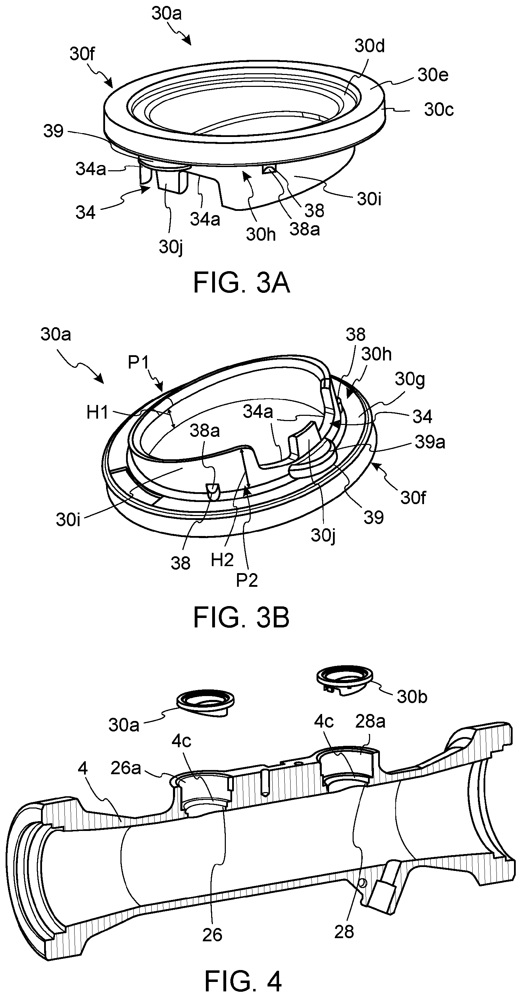

Figures 3A and 3B show perspective views of a first connector for use in the meter 2 shown in Figure 1. The first connector shown in Figures 3A and 3B may comprise any of the features of the first connector 30a described above. In Figure 3B, the view of the first connector 30a is rotated about 180° relative to the view of the first connector 30a in Figure 3A. It will be appreciated that any features described in relation to the first connector 30a may also apply to the second connector 30b.

Referring to Figures 2 to 3B, the first connector 30a comprises an annular shape. The first connector 30a comprises a first portion 30c. The first portion 30c is configured to support and/or receive at least a part of the first ultrasonic transducer 6a. As such, the first connector 30a may allow for an improved and/or controllable alignment of the first ultrasonic transducer 6 relative to the first reflector 24a.

The first portion 30c comprises a first surface 30d for supporting the first ultrasonic transducer 6. For example, a portion of the first ultrasonic transducer engages with the first surface 30d, e.g. when the first connector 30a and the first ultrasonic transducer 6 are arranged in the first opening 26. The first portion 30c comprises a second surface 30e configured for supporting a sealing element 32. The sealing element 32 is arranged between the first ultrasonic transducer 6 and an inner wall of the first opening 26, as shown in Figure 2. The sealing element 32 may form a press fit between the first ultrasonic transducer 6 and the first opening 26. The first connector 30a, the sealing element 32 and the first ultrasonic transducer 6 may be secured in the first opening 26 from above with a fastening element 40, which can be seen in Figure 1 and 2. The fastening element 40 may comprise a fastening screw or any other suitable fastening element. The first surface 30d is recessed relative to the second surface 30e. The first and second surfaces 30d, 30e are arranged on a first side 30f of the first portion 30c. The first portion 30c comprises a third surface 30g for supporting the first connector 30a on the flow tube 4. For example, the third surface 30g is configured to support the first connector 30a on a wall 4c of the flow tube 4. The wall 4c of the flow tube 4 surrounds the first opening 26. The third surface 30g is arranged on a second side 30h of the first portion 30c. The second side 30h of the first portion 30c is opposite to the first side 30f of first portion 30c.

The first connector 30a comprises a second portion 30i. The first connector 30a comprises a first connection element 34. The first connection element 34 is part of the second portion 30i of the first connector 30a. The first connection element 34 extends in a direction parallel to a central or longitudinal axis of the first connector 30a.

Referring to Figures 1 and 2, the measurement insert 18 comprises at least two second connection elements 36. Each second connection element 36 is configured to connect to at least one of the first and second connectors 30a, 30b, respectively. The measurement insert 18 and one or more of the first and second connectors 30a, 30b may be part of a measurement insert assembly or arrangement.

In the present embodiment, the second connection elements 36 are part of the first part 20a of the central portion 20. By providing the first part 20a of the central portion 20 of the measurement insert 18 with the second connection element 36, the second part 20b of the central portion 20 of the measurement insert 18 may be independent configurable from the connection arrangement 30 and/or interchangeable. This may facilitate the use of the connector arrangement 30, e.g. the first and/or second connectors 30a, 30b, and the measurement insert 18 in different flow tubes having different diameters and/or different flow sizes.

The first connection element 34 is configured to connect to the second connection element 36 of the measurement insert 18. In the embodiment shown in Figure 1 and 2, the first connection element 34 of the first connector 30a comprises two notches 34a. The notches may also be referred to as grooves. The notches 34a are parallel, e.g. substantially parallel, to each other. The notches 34a extend in a direction parallel, e.g. substantially parallel, to the central or longitudinal axis of the first connector 30a. It will be appreciated that in other embodiments, the first connection element may comprise more than two notches. In yet other embodiments, the first connection element of the first connector may comprise two or more protrusions, e.g. extending in a direction parallel or perpendicular to the flow direction (or to a longitudinal axis of the measurement insert 18) and/or towards the measurement insert, e.g. when the first connector is arranged in the first opening. The two or more protrusions may be configured to be received by the second connection element, e.g. two or more respective notches, of the measurement insert.

In the embodiment shown in Figure 1 and 2, the second connection element 36 of the measurement insert 18 comprises two protrusions 36a. The protrusions 36 are parallel, e.g. substantially parallel, to each other. The protrusions extend in a direction parallel, e.g. substantially parallel, to a longitudinal axis of the measurement insert 18. However, it will be appreciated that in other embodiments, the second connection element may comprise more than two protrusions. In yet other embodiments, the second connection element may comprise two or more notches, such as the notches 34a. The two or more notches may be configured to receive the second connection element, e.g two or more respective protrusions, of the measurement insert. A number of the notches of one of the first and second connection elements may correspond to a number of the protrusions of another one of first and second connections elements.

The first connector 30a is configured to be connected to the first opening 26 such that the second connection element 36 is received in the first connection element 34, thereby connecting the first end portion 20c of the first part 20a to the flow tube 4. For example, the first connector 30a is configured to be connected to the first opening 26 such that each protrusion 36a is received in a respective notch 34a.

Referring to Figures 2 to 3B, the second portion 30i extends from the first portion 30c. For example, the second portion 30i extends from the third surface 30g of the first portion 30c. The second portion 30i extends from the third surface 30g of the first portion 30c in a direction parallel, e.g. substantially parallel to the central or longitudinal axis of the first connector 30a. The first connector 30a is configured such that a height of the second portion 30i varies. For example, the first connector 30a is configured such that the height of the second portion 30i varies along a circumference of the second portion 30i. Referring to Figure 2, the height of the second portion 30i varies along the circumference of the second portion 30i such that the first connection element 34 extends from the first opening 26 to the measurement insert 18, e.g. when the first connector 30a is connected to the first opening 26.

Referring to Figures 2 to 3B, a first height H1 of the second portion 30i is smaller at a first position P1 than a second height H2 of the second portion 30i at a second position P2. The first position P1 is opposite to the first connection element 34. The second position P2 is adjacent to the first connection element 34. For example, the second position P2 may be a position on either side of the first connection element 34, e.g. the notches 34a.

Referring to Figure 2, the first height H1 of the second portion 30i at the first position P1 corresponds, e.g. substantially corresponds, to a thickness T of the wall 4c of the flow tube 4. The second height H2 at the second position P2 corresponds, e.g. substantially corresponds, to a sum of the thickness of the wall 4c of the flow tube 4 and a thickness T2 of the second connection element 36. Additionally, a third height H3 of a part 30j of the second portion 30i between the two notches 34a may be the same as or similar to the second height H2 at the second position P2 adjacent to the first connection element 34. As such, the third height H3 corresponds, e.g. substantially corresponds, to a sum of the thickness of the wall 4c of the flow tube 4 and a thickness T2 of the second connection element 36. This may allow the part 30j between the two notches 34a to be flush with the protrusions 36 and/or the first part 20a of the central portion 20 and/or prevent the part 30j from extending into the measuring path of the meter 2. By varying the height of the second portion 30i, as described above, an amount of the first connector 30a that protrudes into the measuring path may be reduced, e.g. when the first connector 30a is connected to the first opening 26, while simultaneously allowing a connection between the first and second connection elements 34, 36. The term "height" may be understood as an extension of the second portion 30i in a direction parallel to a central or longitudinal axis of the first connector and/or a direction perpendicular to the longitudinal axis of the meter 2.

The part 30j between the two notches 34a may be provided in the form of a bar. The part 30j between the two notches 4a may define a stop or limit stop for the protrusions 36a of the second connection element. As such, the part 30j between the two notches 34a may prevent rotational movement of the measurement insert 18 relative to the flow tube 4.

The first connector 30a is configured to form an interference fit with the first opening 26 of the flow tube 4. This may provide an improved or secure connection of the measurement insert 18 to the flow tube 4, while preventing the first connector 30a from becoming dislodged from the first opening 26. The second portion 30i of the first connector 30a is configured to form an interference fit with the first opening 26 of the flow tube 4. For example, the first connector 30a comprises a plurality of protrusions 38, 39. Each protrusion comprises a partial cylindrical shape, e.g. a half-cylindrical shape. Each protrusion extends from the third surface 30g of the first portion 30c. The protrusions 38, 39 are arranged on the second portion 30i, e.g. on the circumference of the second portion 30i. At least one of the protrusions 38 is configured such that a circumference of a part of the second portion 30i, which engages with the first opening 26, e.g. the wall 4c, is larger than a circumference of the first opening 26 of the flow tube 4. This may allow for the formation of the interference fit between the first connector 30a and the first opening 26. In this embodiment, three protrusion 38 are configured to enlarge the circumference of the part of the second portion 30i that engages with the first opening 26, e.g. the wall 4c. However, it will be appreciated that more or less than three protrusions may be configured to enlarge the circumference of the part of the second portion. The protrusions 38 may additionally or alternatively prevent loss of the first connector 30a, e.g. during installation of the first connector 30a in the first opening 26, without requiring the first transducer 6 be installed and/or without the use of one or more additional fastening elements, such as one or more fastening screws or the like, to secure the first connector 30a in the first opening 36a.

At least one other of the protrusions 38, 39 is configured to align the first connector 30a relative to the flow tube 4. The at least one other of the protrusions is provided in the form of a first alignment element 39. Although the first alignment element is described as part of the protrusions, it will be appreciated that the first alignment element may be considered as an element that is separate from and/or different, e.g. functionally different, to the protrusions 38. For example, the first alignment element 39 is configured to align the first connector 30a in the first opening 26 of the flow tube 4. The first alignment element 39 may be configured to centre the first connector 30a in the first opening 26 of the flow tube 4. The first alignment element 39 is configured to centre and/or align the first connector 30a in the first opening 26, e.g. so as to allow for connection between the first and second connection elements 34, 36. For example, the first alignment element 39 may be configured to align the first connection element 34 relative to the second connection element 36. The first alignment element 39 may allow for the installation, alignment and orientation of the measurement insert 18 in the flow tube to be facilitated and/or ensured. This in turn may allow for an improved accuracy of the meter 2.

The first alignment element 39 is configured to engage with a corresponding alignment element arranged in the first opening 26. This may for a rotation-proof or twist-proof connection of the first connector 30a to the first opening 26. The corresponding alignment element in the first opening 26 may be provided in the form of a recess, notch, slot, channel or groove or the like, will be described in more detail below. The corresponding alignment element will be referred to as a second alignment element.

In this embodiment, the first alignment element 39 is arranged between the two notches 34a. A size of the first alignment element 39 differs from a size of each of the protrusions 38. For example, the size of the first alignment element 39 is larger than the size of each of the protrusions 38. The larger size of the first alignment element 39 may facilitate engagement between the first connector 30a and the first opening 26. Although Figures 3A and 3B show a single first alignment element 39, it will be appreciated that in other embodiments, the first connector may comprise more than one alignment element.

The alignment of the first connector 30a in the first opening 26 may in turn align the first ultrasonic transducer 6 relative to the first reflector 24a and/or the measuring insert 18 relative to the housing 4.

Each protrusion 38, 39 comprise an angled surface 38a, 39a. The angled surface 38a is angled towards the second portion 30i, as can be seen in Figure 3B. The angled surface 38a, 39a of each protrusion 38, 39 is arranged to facilitate insertion of the first connector 30a into the first opening 26 of the flow tube 4.

The combination of the protrusions 38, 39, e.g. the combination of protrusions 38 and the first alignment element 39, may allow for a rotation-proof or twist-proof and secure connection of the first connector 30a to the first opening 26. The provision of the first connector 30a with the protrusions may further improve an alignment and/or orientation of the measurement insert in the flow tube 4 and/or relative to the first and second transducers 6, 8, e.g. while preventing movement of the measurement insert 18 relative to the flow tube 4.

Figure 4 shows an exploded view of the flow tube 4 and the first and second connectors 30a, 30b shown in Figure 1 without the measurement insert 18. As mentioned above, the flow tube 4 comprises two walls 4c each of which surrounds one of the first and second openings 26, 28, respectively. Each wall 4c may define a surface for supporting at least one of the first and second connector 30a, 30b thereon.

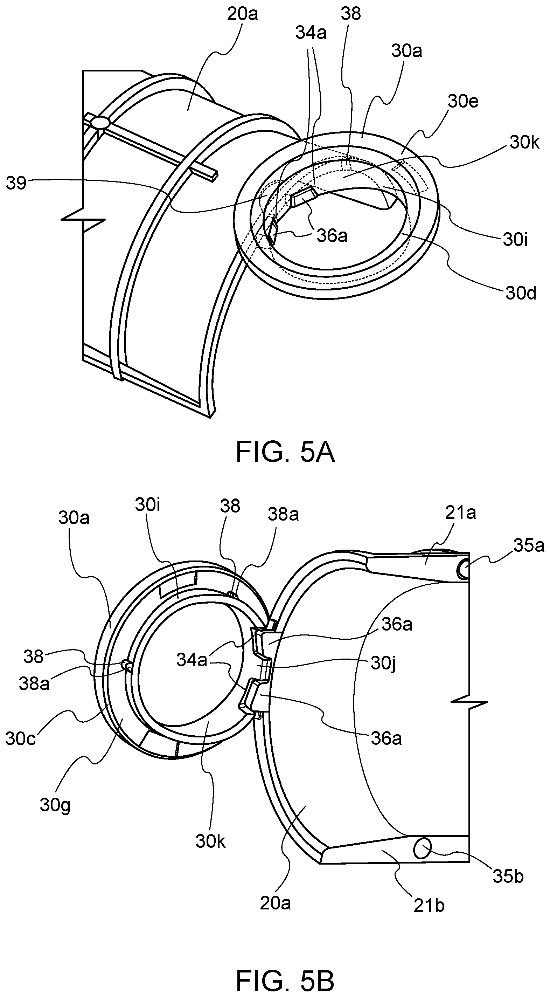

Figure 5A shows a perspective view of the first connector 30a connected to the first part 20a of the central portion 20 of the measurement insert 18 from above. In this figure, the first connector 30a is shown as being partially transparent. Features that can be seen through the first connector 30a are indicated by the dashed lines in Figure 5A. Figure 5B shows a perspective view of the first connector 30a connected to the first part 20a of the central portion 20 of the measurement insert 28 from underneath.

As can be seen in Figures 5A and 5B, when the first connector 30a is connected to the measurement insert 18, the protrusions 36a of the second connection element 36 are inserted in respective notches 34a of the first connection element 34. The second connection element 36 is configured such that the protrusions 36a do not extend past an inner surface 30k of the second portion 30i. The second connection element 36 is configured such that an extension of each protrusion 36a is about the same or less than a depth of the notches 34a. This may avoid obstruction of the first and/or second ultrasonic signals by the second connection element 36, e.g. when the first connector 30a is connected to the measurement insert 18.

Each of the protrusions 36a may comprise a shape that is complementary to a shape of the second portion 30i of the first connector 30a. For example, each protrusion 36a has an angled and curved surface, e.g. such that the protrusions 36a are flush, e.g. substantially flush, with the inner surface 30k of the second portion 30i, when the first connector 30a is connected to the measurement insert 18.

Figure 5B also shows the plurality of further connection elements of the measurement insert 18, mentioned above. Some the further connections elements are part of the first part 20a. The further connection elements comprise a plurality of protrusions 35a configured to be received in a plurality of corresponding bores arranged on the second part 20a. Although Figure 5B only shows one protrusion 35a, it will be appreciated that the first part 20a may comprise more than one protrusion.

The further connection elements comprise a plurality of bores 35b configured to receive a plurality of corresponding protrusions arranged on the second part 20b. Although Figure 5B only shows one bores 35a, it will be appreciated that the first part 20a may comprise more than one bore.

The first part 20a comprises two contact portions 21a, 21b. The contact portions 21a, 21b are configured to contact two corresponding contact portions of the second part 20b, e.g. when the first and second parts 20a, 20b are connected together to form the central portion 20. The contact portions 21a, 21b of the first part 20a extend in a direction parallel, e.g. substantially parallel, to the longitudinal axis of the meter 2. A distance between the contact portions 21a, 21b may correspond, e.g. substantially correspond, to a diameter of the central portion 20. In the embodiment shown in Figure 5B, the protrusion 35a is arranged on a first contact portion 21a and the bore 35b is arranged on a second contact portion 21b.

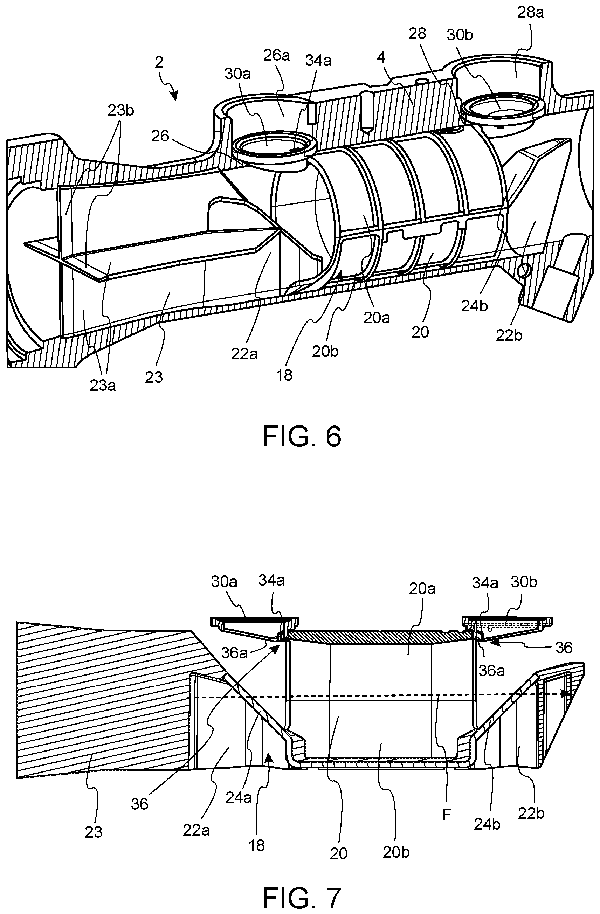

Figure 6 shows a perspective view of the meter 2 shown in Figure 1 with the flow tube 4 shown in section. Figure 7 shows a sectional view of the measurement insert 18 of the meter 2 shown in Figure 1 with the first connector and the second connector connected thereto. In this figure, the second connector 30b is shown as being partially transparent. Features that can be seen through the second connector 30b are indicated by the dashed lines in Figure 7. The first and second ultrasonic transducers are not shown in Figures 6 and 7.

Referring to Figures 6 and 7, the measurement insert 18, e.g. the first part 20a of the central portion 20, is configured such that the second connections elements 36, e.g. the protrusions 36a, extend in a direction parallel to the flow direction F or to the longitudinal axis of the measurement insert 18. The measurement insert 18, e.g. the first part 20a of the central portion 20, is configured such that the second connection elements 36, e.g. the protrusions 36a, extend outwards or away from the measurement insert 18, e.g. the first part 20a of the central portion 20. For example, the measurement insert 18, e.g. the first part 20a of the central portion 20, is configured such that the second connection elements 36, e.g. the protrusions 36a, extend in opposite directions from the measurement insert 18, e.g. the first part 20a of the central portion 20.

Referring to Figure 6, the flow conditioner 23 comprises one or more guide plates 23a. In this embodiment, the flow conditioner 23 comprises two guide plates 23a. However, it will be appreciated that in other embodiments, the flow conditioner may comprise more or less than two guide plates. The guide plates 23a are arranged to form a cross arrangement. However, the flow conditioner described herein is not limited to a cross arrangement of the guide plates. It will be appreciated that in other embodiments, the guide plates may be differently arranged. An edge portion 23b of each guide plate 23 is tapered towards a free end of each guide plate 23a. The edge portion 23b may also be referred to as a leading edge. By tapering the edge portion 23b of each guide plate, a surface of each edge portion 23b of each guide plate 23a may be reduced. This is turn may reduce turbulences in the fluid flowing through the meter. Alternatively or additionally, the flow conditioner 23 may comprise a perforated guide plate (not shown).

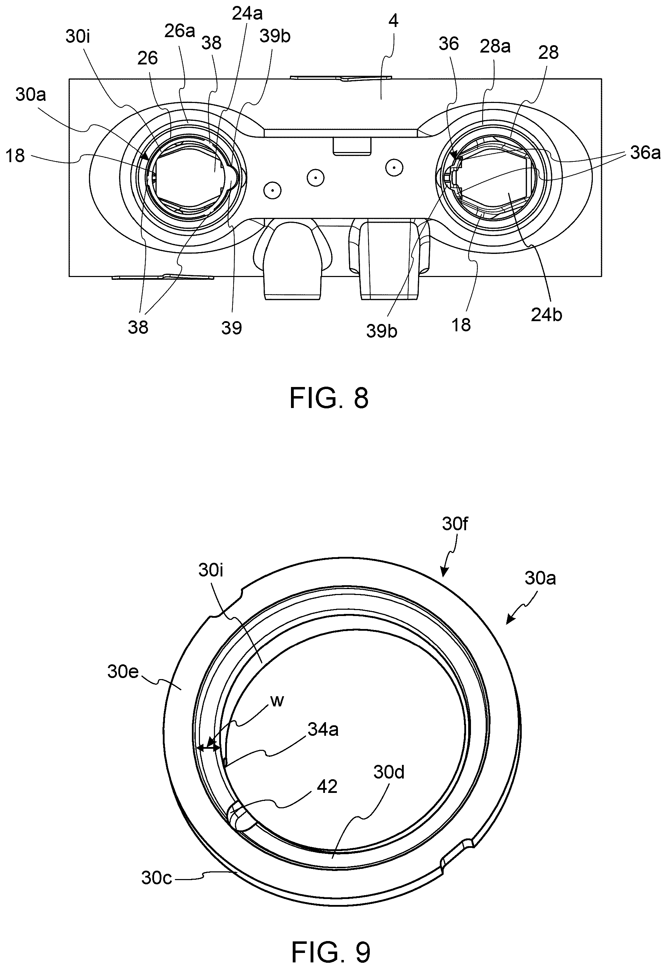

Figure 8 shows a top view of the flow tube 4. In the embodiment shown in Figure 8 only the first connector 30a is connected to the first opening 26. However, it will be appreciated that any features described in relation to the first connector 30a and the first opening 26 may also apply to the second connector and the second opening, respectively. In Figure 8, only the second portion 30i of the first connector 30a is shown for sake of clarity.

As described above, the protrusions 38, 39 are arranged on the circumference of the second portion 30i. As described above, at least one of the protrusions is provided in the form of the first alignment element 39. The first alignment element 39 is configured to align the first connector 30a relative to the flow tube 4. For example, as described above, the first alignment element 39 is configured to engage with the second alignment element of the first opening 6. The second alignment element is provided in the form of a recess 39b. It will be appreciated that in other embodiments, the second alignment element may be provided in the form of a notch, channel, groove, slot or the like. As can be seen from Figure 8, each of the first and second openings 6, 8 comprise a respective recess 39b. The recess 39b of the first opening 26 and the recess 39b of the second opening 8 face and/or open in opposite directions, e.g. parallel to the flow direction F or to the longitudinal axis of the measurement insert and/or flow tube 4. Figure 8 shows the first alignment element 39 of the first connector 30a engaged with the recess 39b of the first opening 26. The alignment element 39 and the recess 39b comprise complementary shapes. For example, the recess 39b is shaped such that the alignment element is receivable therein and/or engageable therewith. Figure 8 also shows the recess 39b of the second opening 28 without the respective first alignment element engaged therewith. In this embodiment, the first alignment element 39 and the recess 39b each comprise a partial cylindrical shape, e.g. a half-cylindrical shape. However, it will be appreciated that in other embodiments, the first alignment element and the recess may have a different shape, such as a cuboid shape, half-cylindroid shape or the like.

The first alignment element 39 and the recess 39b are configured to align the first connector 30a relative to the flow tube 4. The alignment of the first connector 30a relative to the flow tube 4 may also align the first transducer 6 reflective to the first reflector 34a. Additionally or alternatively, the alignment element and the recess 39b may prevent an incorrect installation of the first and second connectors 30a, 30b in the first and second openings 26, 28, respectively. The provision of the first connector 30a with the first alignment element 39 and the provision of first opening 26 with the recess 39b may further improve an alignment and/or orientation of the measurement insert 18 in the flow tube 4 and/or relative to the first and second transducers 6, 8e.g. while preventing movement of the measurement insert 18 relative to the flow tube 4. For example, the first alignment element 39 may be configured to align the first connection element 34 relative to the respective second connection element 36. Although Figure 8 shows a single second alignment element 39b in each of the first and second openings 6, 8, it will be appreciated that in other embodiments, at least one or each of the first and second openings may comprise more than one second alignment element.

Figure 9 shows another exemplary first connector 30a for use in the meter 2. The first connector shown in Figure 9 may comprise any features of the first connector 30a described above. Any features described in relation to the first connector 30a may also be applicable to the second connector 30b.

In this embodiment, the first connector 30a comprises a mounting element 42. The mounting element 42 is part of the first portion 30c. For example, the mounting element 42 is arranged in the first surface 30d. The mounting element 42 may be provided in the form of a recess, notch, groove, slot or the like.

The mounting element 42 is configured to indicate a position of the first alignment element 39, e.g. when the first connector 30a is connected to the first opening 26. For example, the mounting element 42 may be arranged on the first portion 30c such that the mounting element 42 is opposite to the first alignment element 39. Expressed differently, the mounting element 42 and the first alignment element 39 may be arranged at the same position, e.g. substantially the same position, on opposing sides of the first portion 30c. However, it will be appreciated that in other embodiments, the mounting element may be arranged at a different position on the first portion of the first connector.

The mounting element 42 is configured to engage a holding element (not shown), such as a holding pin, holding bar or the like, during or after installation of the first connector 30a in the first opening 26. For example, the mounting element 42 may be configured to receive at least part or all of the holding element. The holding element may be part of a mounting apparatus (not shown). The mounting apparatus may be used to connect the measurement insert 18 to the flow tube 4. The mounting apparatus may be configured to hold and position the first connector 30a, the second connector 30b, the measurement insert 18 and the flow tube 4 relative to each other. This may ensure a correct alignment, fit and functioning of at least these parts of the meter 2.

For example, during installation, the mounting apparatus may receive the first connector 30a, whereby the holding element engages with the mounting element 42 of the first connectors 30a. By engaging the mounting element with the holding element of the mounting apparatus, the first connector 30a may be correctly orientated and/or aligned relative to the flow tube 4. Subsequent to engaging the holding element with the mounting element 42 of the first connector 30a, the first connector 30a is connected to the first opening 36. The engagement between the mounting element 42 and holding element of the mounting apparatus may ensure that the first connector 30a is correctly aligned and/or installed in the first opening 26 of the flow tube 4a. This may facilitate the manufacture of the meter 2. Additionally or alternatively, the mounting element 42 may facilitate a check that the first connector 30a is correctly connected to the first opening 26. For example, after installation, the holding element may be engaged with the mounting element 42 to check the alignment and/or orientation of the first connector 30a in the first opening 26.

The mounting element 42 may be configured to be a counterpart of the holding element of the mounting apparatus. The mounting element 42 comprises a shape that is complementary to the shape of the holding element. In this embodiment, the holding element comprises a cylindrical shape. The mounting element 42 comprises a partial cylindrical shape, e.g. a half-cylindrical shape. However, it will be appreciated that in other embodiments, the holding element and/or the mounting element may comprise another shape, such as a cuboid shape, half or full cylindroid shape or the like. The mounting element 42 spans a width W of the first surface 30d. The width may be understood as a dimension of the first surface 30d, which extends in a direction perpendicular to a central axis of the first connector 30a.

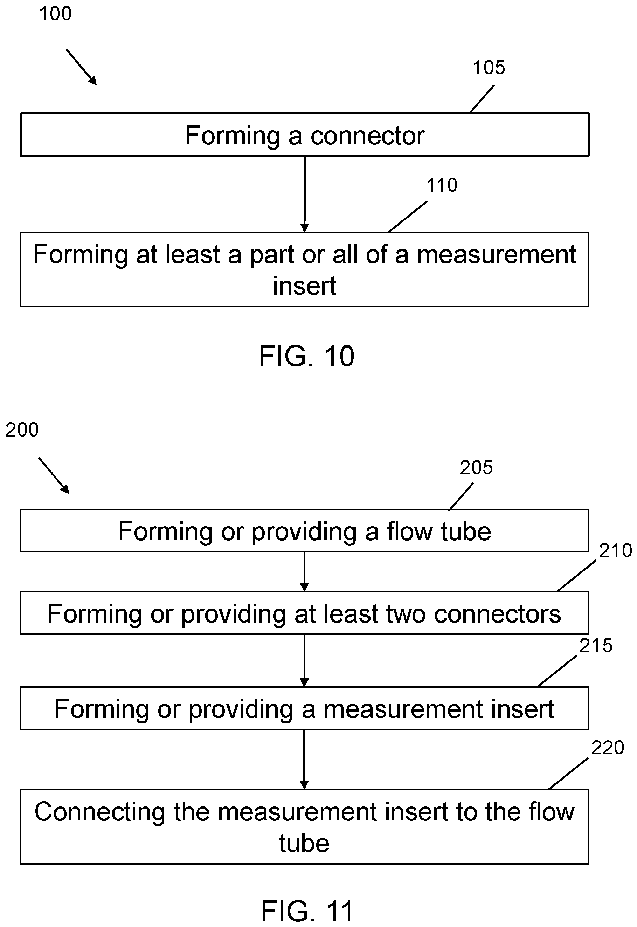

Figure 10 shows a flow chart illustrating in overview a method 100 of forming a measurement insert assembly or arrangement for a utility meter according to an embodiment of the disclosure.

At stage 105, at least one or each of the first and second connectors 30a, 30b may be formed, e.g. using a moulding process, such as an injection moulding process. The process may comprise providing a first mould. The first mould may define a shape of the first or second connector 30a, 30b. The first or second connector 30a, 30b may be formed by injecting a molten plastic material into the first mould. The process may comprise hardening the plastic material in the first mould to form the first or second connector 30a, 30b.

In some embodiments, the moulding process comprises a die casting process. In such embodiments, the first mould comprises a metal mould or die. The first or second connector may be formed by injecting a molten metal material or metal alloy material into the first mould. The molten metal material may be injected into the first mould under a pressure, such as a pressure between 20kPa and 100kPa or a pressure between 10 MPa and 175 MPa. The pressure may be maintained until the metal material or metal alloy material has solidified.

In some embodiment, the method may comprise using a shaping process, such as a milling process, a drilling process and/or another shaping process, to form at least one or each of the first and second connectors 30a, 30b. The method may comprise providing a workpiece. The workpiece may comprise the metal material or metal alloy material mentioned above. The method may comprise removing material from the workpiece to form the at least one or each of the first and second connectors 30a, 30b, e.g. using the shaping process.

At stage 110, at least a part or all of the measurement insert may be formed. The measurement insert 18 may be formed using a moulding process. The process may comprise providing a second mould. The second mould may define a shape of the first part 20a of the central potion 20 of the measurement insert 18. The first part 20a of the central portion 20, including the second connection elements 36, may be formed by injecting a molten plastic material into the second mould. The process may comprise hardening the plastic material in the second mould to form the first part 20a of the central portion 20, including the second connection elements 36.

The process may comprise providing a third mould. The third mould may define a shape of at least the second part 20a of the central potion 20 of the measurement insert 18. The second part 20b of the central portion 20 may be formed by injecting a molten plastic material into the third mould. The first and second reflectors 24a, 24b may be arranged in the third mould prior to injecting the molten plastic material. The process may comprise hardening the plastic material in the third mould to form the second part 20b of the central portion 20. The first and second connectors 30a, 30b and the first and second parts 20a, 20b of the central portion 20 may each be formed from the plastic material mentioned above. It will be appreciated that the second part 20a of the central portion 20 may be simultaneously be formed with the supports 22a, 22b and the flow conditioner 23 using the moulding process. As such, the third mould may additionally define a shape of the supports 22a, 22b and the flow conditioner 23.

It will be appreciated that stages 105 and 110 may be independently performed. For example, stage 105 may be performed as a method of forming a connector, such as the first or second connector 30a, 30b described above. Stage 110 may be performed as a method of forming the measurement insert, such as the measurement insert 18 described above.

It will be appreciated that in some embodiments, the first connector 30a, the second connector 30b and one or more parts of the measurement insert 18 may be formed using an additive manufacturing process. A common example of additive manufacturing is 3D printing. However, other methods of additive manufacturing are available. Rapid prototyping or rapid manufacturing are also terms, which may be used to describe additive manufacturing processes.

As used herein, "additive manufacturing" refers generally to manufacturing processes wherein successive layers of material(s) are provided on each other to "buildup" layer-by-layer or "additively fabricate", a three-dimensional component. This is compared to some subtractive manufacturing methods (such as milling or drilling), wherein material is successively removed to fabricate the part. The successive layers generally fuse together to form a monolithic component which may have a variety of integral sub-components.

Suitable additive manufacturing techniques in accordance with the present disclosure include, for example, Fused Deposition Modeling (FDM), 3D printing such as by inkjets and laserjets, Sterolithography (SLA), Digital Light Processing (DLP), Continuous Digital Light Processing (CDLP), Material Jetting (MJ), NanoParticle Jetting (NPJ), Drop On Demand (DOD), Binder Jetting (BJ), Multi Jet Fusion (MJF), Laminated Object Manufacturing (LOM) and other known processes.

The additive manufacturing processes described herein may be used for forming components using any suitable material. For example, the material may be plastic, polymer, metal, metal alloy, or any other suitable material that may be in solid, liquid, powder, sheet material or any other suitable form or combinations thereof. These materials are examples of materials suitable for use in additive manufacturing processes, which may be suitable for the fabrication of examples described herein.

The additive manufacturing process disclosed herein allows a single component to be formed from multiple materials. Thus, the examples described herein may be formed from any suitable mixtures of the above materials. For example, a component or part may include multiple layers, segments, or parts that are formed using different materials, processes, and/or on different additive manufacturing machines. In this manner, components or parts may be constructed, which have different materials and material properties for meeting the demands of any particular application. In addition, although the components or parts described herein are constructed entirely by additive manufacturing processes, it should be appreciated that in alternate embodiments, all or a portion of these components or parts may be formed via machining, moulding, e.g. injection moulding and/or die casting, and/or any other suitable manufacturing process. Indeed, any suitable combination of materials and manufacturing methods may be used to form these components or parts.

Additive manufacturing processes typically fabricate components or parts based on three-dimensional (3D) information, for example a three-dimensional computer model (or design file), of the component.

Accordingly, examples described herein not only include a product or components as described herein, but also methods of manufacturing such a product or components via additive manufacturing and computer software, firmware or hardware for controlling the manufacture of such a product via additive manufacturing. It will be appreciated that the product or component may comprise the first connector 30a, the second connector 30b and/or one or more parts of the measurement insert 18.

The structure of one or more parts of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product.

Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files can be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce the product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining an electronic file or design file representing a geometry of the product and controlling an additive manufacturing apparatus to manufacture the product, over one or more additive manufacturing steps, the product according to the geometry specified in the electronic file or design file. The additive manufacturing apparatus may include a processor that is configured to automatically convert the electronic file or design file into computer executable instructions for controlling the manufacture of the product. In these embodiments, the electronic file or design file itself can automatically cause the production of the product once input into the additive manufacturing device. Accordingly, in this embodiment, the electronic file or design file itself may be considered computer executable instructions that cause the additive manufacturing apparatus to manufacture the product. Alternatively, the electronic file or design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

The method 100 may be part of a method 200 of forming a utility meter, such as the meter 2 described above. Figure 11 shows a flow chart illustrating in overview the method 200 of forming the meter 2 according to an embodiment of the disclosure. At stage 205, the method 200 comprises providing or forming a flow tube, such as flow tube 4 described above. The flow tube 4 may be formed using a moulding process, such as a die casting process.

At stage 210, the method 200 comprises forming or providing at least two connectors, such as the first and second connectors 30a, 30b described above. Each of the at least two connectors may be formed as described above.

At stage 215, the method 200 comprises forming or providing a measurement insert, such as the measurement insert 18 described above. The measurement insert 18 may be formed as described above.

At stage 220, the method 200 comprises connecting the measurement insert 18 to the flow tube 4. Stage 220 may comprise arranging the measurement insert in the flow tube. Stage 220 may comprise connecting the first connector 30a to the first opening 26 of the flow tube 4 and connecting the first connection element 34 to a respective second connection element 36 of the measurement insert 18. Stage 220 may comprise connecting the second connector 30b to the second opening 28 of the flow tube 4 and connecting the first connection element 34 to a respective second connection element 36 of the measurement insert 18. For example, a mounting apparatus may be used to connect the measurement insert to the flow tube 4.

It will be understood that references to a plurality of features may be interchangeably used with references to singular forms of those features, such as for example "at least one" and/or "each". Singular forms of a feature, such as for example "at least one" or "each," may be used interchangeably.

Although the disclosure has been described in terms of particular embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

## Claims

1. A connector for connecting a measurement insert to a flow tube of a utility meter, the connector being configured to connect to a transducer opening of the flow tube of the utility meter and comprising:
a first portion configured to receive a part of an ultrasonic transducer; and
a second portion comprising a first connection element, the first connection element being configured to connect to a second connection element of the measurement insert.

2. The connector of claim 1 comprising a plurality of protrusions arranged on a circumference of the second portion, at least one of the plurality of protrusions being configured to align the connector in the transducer opening of the flow tube and/or to engage with a corresponding alignment element of the transducer opening.

3. The connector of claim 2, wherein at least one other of the plurality of protrusions is configured such that a circumference of a part of the second portion of the connector is larger than a circumference of the transducer opening of the flow tube.

4. The connector of any preceding claim, wherein the second portion extends from the first portion and a height of the second portion varies along a circumference of the second portion.

5. The connector of claim 4, wherein the height of the second portion varies along the circumference of the second portion such that the first connection element extends from the transducer opening to the measurement insert, when the connector is connected to the transducer opening.

6. The connector of claim 4 or 5, wherein the height of the second portion is smaller at a first position than at a second position on the second portion, the first position being opposite to the first connection element and the second position being adjacent to the first connection element.

7. The connector of any preceding claim, wherein the second portion is configured to connect to the transducer opening of the flow tube and/or the second portion is configured to form an interference fit with the transducer opening of the flow tube.

8. The connector of any preceding claim, wherein the first connection element comprises at least one of:
two or more notches configured to receive the second connection element of the measurement insert; and/or
two or more protrusions configured to be received by the second connection element of the measurement insert.

9. The connector of any preceding claim, wherein the first portion comprises a first surface for supporting the ultrasonic transducer, a second surface for supporting a sealing element and/or a third surface for supporting the connector on a wall surrounding the transducer opening.

10. A measurement insert for arrangement in a flow tube of a utility meter, the measurement insert comprising at least two second connection elements, wherein each of the at least two second connection elements is configured to connect to a respective connector according to any one of claims 1 to 9.

11. The measurement insert of claim 10, wherein each of the at least two second connection elements comprises at least one of:
two or more notches configured to receive the first connection element of the connector; and/or
two or more protrusions configured to be received by the first connection element of the connector.

12. The measurement insert of claim 10 or 11, wherein at least one of the at least two second connection elements is arranged on a first end portion of the measurement insert and at least one other of the at least two connection elements is arranged on a second end portion of the measurement insert.

13. A utility meter, the meter comprising:
a flow tube;
a measurement insert for arrangement in the flow tube of the utility meter according to any one of claims 10 to 12; and
a connector for connecting the measurement insert to the flow tube of the utility meter according to any one of claims 1 to 9.

14. A method of forming a connector according to any one of claims 1 to 9, the method comprising forming the connector using a moulding process, a shaping process and/or an additive manufacturing process.

15. A method of forming a measurement insert according to any one of claims 10 to 12, the method comprising forming at least a part of the measurement using a moulding process or an additive manufacturing process, the part of the measurement insert comprising the at least two second connection elements.
